# EUROPEAN PATENT APPLICATION

(11) **EP 4 550 170 A1**
(43) Date of publication of application: **07.05.2025**
(21) Application number: 23830460.4
(22) Date of filing: 29.06.2023
(51) Int. Cl.: G06F 16/36, G06F 16/532, G06F 16/21

(54) **METHOD AND APPARATUS FOR TWINNING AND SUBSCRIBING TO HISTORICAL STATE OF TARGET OBJECT**

(30) Priority: 30.06.2022 CN 202210767339; 30.06.2022 CN 202210767657
(71) Applicant: Beijing Wellintech Co., Ltd., Beijing 100086 (CN)
(72) Inventor: LIN, Wei, Beijing 100086 (CN)
(74) Representative: Cabinet Nony
(86) International application number: PCT/CN2023/104174
(87) International publication number: WO 2024/002296

(57) **Abstract**

Provided in the present disclosure are a method and apparatus for twinning and subscribing to a historical state of a target object, which method and apparatus are used for twinning the historical state of the target object by means of a digital twinning technique. The method specifically comprises: for a target object and at least one sub-object affiliated with the target object, respectively establishing a target object model and at least one sub-object model (S101), wherein the target object model and the at least one sub-object model each comprise a time attribute; setting the values of the time attributes in the target object model and the at least one sub-object model to be historical times, wherein the historical times are used for indicating times corresponding to data in the target object model and data in the at least one sub-object model; and establishing a first association relationship between the target object model and the at least one sub-object model, wherein the first association relationship is used for associating the at least one sub-object model with the target object model (S103).

## Description

### Cross-Reference to Related Applications

This application claims priority to Chinese Patent Application No. 202210767339.9, filed with the China National Intellectual Property Administration on June 30, 2022 and entitled "Method and apparatus for twining and subscribing to historical state of target object", and priority to Chinese Patent Application No. 202210767657.5, filed with the China National Intellectual Property Administration on June 30, 2022 and entitled "Method and apparatus for twining and subscribing to historical state of target object", both of which are hereby incorporated by reference in their entireties.

### Technical Field

This disclosure relates to the field of data processing technology, specifically to a method and apparatus for twinning and subscribing to the historical state of a target object.

### Background

**In** the industrial field, in order to more conveniently supervise industrial production activities, digital twins of the five elements included in the production process, including people, machines, materials, methods, and environments, have become an irresistible development trend. However, existing digital twin technologies for these elements usually lack specialized digital twin theory and technology for their historical state.

Therefore, how to realize a digital twin of the historical state of the target object is an urgent problem that needs to be solved.

### Summary

The present disclosure provides a method and apparatus for twinning and subscribing to the historical state of a target object in order to twin the historical state of a target object.

In the first aspect, the present disclosure provides a method for twining the historical state of a target object including: establishing a target object model and at least one sub-object model respectively for a target object and at least one sub-object attached to the target object; wherein the target object model is used for describing the target object, and the at least one sub-object model is used for describing the at least one sub-object, the target object model and the at least one sub-object model both include a time attribute; setting a value of the time attribute in the target object model and the at least one sub-object model to a first historical time, wherein the first historical time is used for indicating a time corresponding to data in the target object model and the at least one sub-object model; establishing a first association relationship between the target object model and the at least one sub-object model, wherein the first association relationship is used for associating the at least one sub-object model to the target object model.

**In** this scheme, various target objects can be digitally twinned based on their specific situations, resulting in corresponding object models. Thus, the system provides users with information about each object by creating models for each object, achieving digital management of the target objects. Meanwhile, the time attribute records the corresponding time of each historical data in the object model, making the information stored in the object model more accurate and comprehensive. Furthermore, the hierarchical relationship between objects in reality can be created as the association relationship between object models, enabling the system to provide users with information about the relationships between objects in reality, thereby improving the efficiency of managing the target objects.

In some embodiments, the target object includes a first target entity, and the sub-object includes a sub-entity; or the target object includes a target event, and the sub-object includes a sub-event.

In some embodiments, the first historical time is at least one moment before a current moment or at least one duration period before a current moment.

In this scheme, users can obtain the corresponding time of each historical data through the time attribute in the object model, thus gaining a clearer understanding of the historical state of the target object and the corresponding information, enhancing the management of information about the target object.

In some embodiments, a case that the target object includes a target event, and the sub-object includes a sub-event, the value of the time attribute in the at least one sub-object model is within a range of the value of the time attribute in the target object model.

In some embodiments, the first association relationship is used for indicating that the target object model and the at least one sub-object model are in a parent-child relationship.

In this scheme, the connection between models is strengthened through the first correlation relationship, thereby improving the efficiency of model management.

In some embodiments, the establishing the first association relationship between the target object model and the at least one sub-object model, includes: identifying the target object model as a parent object model, and identifying the at least one sub-object model as a child object model belonging to the parent object model.

In some embodiments, the target object model and the at least one sub-object model further include a model identifier, the model identifier is used for uniquely identifying the target object model and the at least one sub-object model.

In this scheme, each model has its own system-wide unique model identifier, so that the model can be accurately searched during subsequent access, and the management efficiency of the model is improved.

In some embodiments, the target object model and the at least one sub-object model further include a member attribute, the member attribute is used for describing user-defined data.

In some embodiments, the target object includes a first target entity, the sub-object includes a sub-entity, and the target object model and the at least one sub-object model further includes a spatial attribute, the spatial attribute is used for describing one or more of following information of the target object model and the at least one sub-object model: coordinate system information, geometric shape information, spatial position information, spatial rotation angle information, and spatial range information.

In this scheme, when the object includes entity objects, spatial attributes are added to the model to make the entity information contained in the object model more comprehensive and complete. At the same time, the association relationship between object models is associated based on the above-mentioned spatial attributes, which makes the connection between each object model closer, and is helpful to realize management operations such as quick search based on object models.

In some embodiments, the spatial attribute includes the spatial range information, the spatial range information is used for describing a spatial range where the target object model and the at least one sub-object model are located; a spatial range of the at least one sub-object model does not exceed a spatial range of the target object model.

In some embodiments, the method further includes: establishing a first coordinate system in the target object model, and establishing a second coordinate system in a first sub-object model; wherein the first sub-object model is one of the at least one sub-object model, and an origin of the second coordinate system is determined based on an origin of the first coordinate system; determining the spatial position information of the target object model and the at least one sub-object model according to the first coordinate system; or determining the spatial position information of the target object model according to the first coordinate system, and determining the spatial position information of the at least one sub-object model according to the second coordinate system; determining the geometric shape information of the target object model and the at least one sub-object model according to the first coordinate system; or determining the geometric shape information of the target object model according to the first coordinate system, and determining the geometric shape information of the first sub-object model according to the second coordinate system.

In this scheme, several different methods for assigning spatial attributes to the model are provided, which improves the flexibility and universality of the scheme. Specifically, when the spatial attributes of the target object and the sub-object model associated with the target object model are assigned according to the first coordinate system in the target object model, the target object and the sub-object have a unified reference coordinate system, and the relationship between their relative positions is displayed more intuitively and closely, which further strengthens the correlation between the target object model and the sub-object model, and improves the management efficiency of the object model. When the first coordinate system and the second coordinate system are established in the target object model and the sub-object model respectively, and the origin of the second coordinate system is established according to the origin of the first coordinate system, the spatial attributes of the assigned models retain the built-in association relationship, and also have a certain degree of independence, which improves the degree of fine management of the object model.

In some embodiments, the spatial attribute includes the spatial position information, the target object model and the at least one sub-object model further include a position attribute, and the method further includes: in a case that the spatial position information of the target object changes, saving changes in the spatial position information to the position attribute of the target object model; the position attribute is used for describing a position change of the target object at at least one moment before a current moment, or a position change of the target object within at least one duration period before a current moment.

In this scheme, the position change of the object is recorded through the position attribute, which improves the data held in the object model and improves the refinement of the management of the object model.

In some embodiments, the method further includes: in a case that a spatial position of a second sub-object is not within a spatial range of the target object, updating a first association relationship between a second sub-object model corresponding to the second sub-object and the target object model, and updating a spatial attribute and a time attribute of the second sub-object model; the second sub-object is one of the at least one sub-object.

In this scheme, the association relationship of the model corresponding to the object is updated in time to ensure the effectiveness of the management of the target object through the model.

In some embodiments, the method further includes generating a parent object record corresponding to the target object model and at least one child object record corresponding to the at least one sub-object model at at least one moment before a current moment or within at least one duration period before a current moment through the target object model and the at least one sub-object model; the parent object record is used for describing an attribute state of the target object at at least one moment before the current moment or within at least one duration period before the current moment; the at least one child object record is used for describing an attribute state of the at least one sub-object at at least one moment before the current moment or within at least one duration period before the current moment.

In this scheme, the corresponding object record is generated through the model, so that the user can obtain unified and standardized historical state information about the target object, which improves the user's user experience and reduces the complexity of obtaining information.

In some embodiments, the method further includes: establishing a second association relationship between the parent object record and the at least one child object record, the second association relationship being used for associating the at least one child object record with the parent object record; each child object record corresponds to a unique parent object record, the parent object record and the at least one child object record both include a time range, and a time range of the child object record is within a time range of the parent object record.

In this scheme, the generated parent object records and child object records are linked, and the association relationship between object models can be carried out, and the association relationship between models and information can be strengthened, and the efficiency of object information management can be improved.

In some embodiments, in a case that the spatial attribute includes the spatial range information, the parent object record and the child object record are used for describing a change information of spatial range of the target object and the at least one sub-object at at least one moment before a current moment or within at least one duration period before a current moment; at at least one moment before the current moment or within at least one duration period before the current moment, a spatial range of the child object record corresponding to the at least one sub-object is in a spatial range of the parent object record.

In this scheme, the object record includes the spatial range changes of the corresponding object, which can effectively help the user obtain the corresponding information.

In some embodiments, in a case that the spatial attribute includes the spatial position information, the parent object record and the child object record are used for describing a change information of spatial position movement at at least one moment before a current moment or within at least one duration period before a current moment; a spatial position of the at least one sub-object is in a spatial range of the parent object record at at least one moment before the current moment or within at least one duration period before the current moment.

In this scheme, the object record includes the spatial position change of the corresponding object, which can effectively help the user obtain the corresponding information.

In some embodiments, in a case that the spatial attribute includes the geometric shape information, the parent object record and the child object record are used for describing a change information of geometric shape of the target object and the at least one sub-object at at least one moment before a current moment or within at least one duration period before a current moment; wherein a geometric shape of the at least one child object is in a geometric shape of the parent object record at at least one moment before the current moment or within at least one duration before the current moment.

In this scheme, the object record includes the geometric shape change of the corresponding object, which can effectively help the user obtain the corresponding information.

In some embodiments, the target object includes a target event and the sub-object includes a sub-event, the method further includes: establishing a second target entity model for a second target entity, wherein the second target entity model is used for describing a historical state of the second target entity, and the second target entity model includes a time attribute; determining a value of the time attribute of the target entity model as a second historical time, wherein the second historical time is used for indicating a time corresponding to data in the second target entity model; establishing a third association relationship between the second target entity model and the target object model, wherein the third association relationship is used for associating the second target entity model with the target object model.

In this scheme, under the premise that the target object includes the target event and the sub-object includes the sub-event, a second target entity model associated with the target object model is created, which improves the scheme of twinning the historical state of the event, strengthens the comprehensiveness of the information stored in the model, and improves the management efficiency of the event information.

In some embodiments, the third association relationship is used for indicating that the second target entity model and the target object model have a spatial relationship, and the spatial relationship is used for indicating that the target object corresponding to the target object model occurs within a spatial range of the second target entity corresponding to the second target entity model.

In this scheme, the spatial relationship between the object model and the solid object model is demonstrated through the third association relationship, which strengthens the connection between the models and improves the efficiency of model management.

In some embodiments, the target object includes a target event, and the sub-object includes a sub-event; the target object model and the at least one sub-object model further include a spatial attribute, and the spatial attribute is used for describing a position information of the target object and the at least one sub-object in a case that the target object and the at least one sub-object occur.

In some embodiments, the spatial attribute includes a spatial range and/or a spatial position, a spatial range of the at least one sub-object model is in a spatial range of the target object model, or a spatial position of the at least one sub-object model is in a range of a spatial position of the target object model.

In some embodiments, the target object includes a target event, the sub-object includes a sub-event, and the method further includes: generating a corresponding target event object record based on attribute parameters of the target object at different history times, and the target object model corresponding to the history times; generating a corresponding sub-event object record based on attribute parameters of the at least one sub-object at different history times, and the at least one sub-object model corresponding to the history times; the attribute parameters include at least one of attribute name, data type, or attribute value.

In this scheme, the corresponding object record is generated through the model, so that the user can obtain the unified and standardized historical state information about the object, which improves the user's user experience and reduces the complexity of obtaining information.

In some embodiments, the method further includes: establishing a fourth association relationship between the target event object record and the at least one sub-event object record, the fourth association relationship being used for associating the at least one sub-event object record with the target event object record; wherein each sub-event object record in the at least one sub-event object record corresponds to a unique target event object record, both the target event object record and the at least one sub-event object record include a time range, and a time range of the sub-event object record is within a time range of the target event object.

In this scheme, the generated target event object records are linked with the sub-event object records, which can implement the correlation between events, strengthen the correlation between events and information, and improve the efficiency of event information management.

In the second aspect, the present disclosure provides a method for subscribing to a historical state of a target object, including: establishing a target object model and at least one sub-object model respectively for a target object and at least one sub-object attached to the target object; wherein the target object model is used for describing the target object, and the at least one sub-object model is used for describing the at least one sub-object, the target object model and the at least one sub-object model both include a time attribute; setting a value of the time attribute in the target object model and the at least one sub-object model to a first historical time, wherein the first historical time is used for indicating a time corresponding to data in the target object model and the at least one sub-object model; establishing a first association relationship between the target object model and the at least one sub-object model, the first association relationship being used for associating the at least one sub-object model to the target object model; receiving a first request from a terminal device, wherein the first request is used for requesting a subscription to the historical state of the target object; performing a subscription operation on the target object model in response to the first request, performing a subscription operation on the at least one sub-object model according to the first association relationship between the at least one sub-object model and the target object model.

In this scheme, based on the existence of the first association between the models, after subscribing to the target object model, the same subscription operation can be performed on at least one sub-object model that is associated according to the association relationship in the target object model. In this way, users only need to give instructions to subscribe to the target object model, and at the same time subscribe to the models associated with the target object model, and obtain the change information of these models in time. The ability to obtain more comprehensive information with simple operations has increased the intelligence of subscription operations.

In some embodiments, the target object includes a target entity, and the sub-object includes a sub-entity; or the target object includes a target event, and the sub-object includes a sub-event.

In some embodiments, the first request carries a subscription item, and the method further includes: generating subscription information matching the subscription item in a case that a change in the target object model and/or the at least one sub-object model occurs; send the subscription information to the terminal device.

In this scheme, the server sends the corresponding subscription information to the terminal device according to the subscription item carried in the first request, which can not only meet the users' subscription needs, but also avoid the tracking of other model information that the users do not care about, and realize the refined management of object information.

In some embodiments, the subscription item includes one or more of following: a spatial attribute, a position attribute, and a member attribute.

In some embodiments, the sub-object includes a sub-entity, and the change includes: a sub-object model change, and the sub-object model change is used for representing a change of quantity of the at least one sub-object model corresponding to the target object model.

In the third aspect, the present disclosure provides a device for twinning a historical state of a target object, including: an establishing module configured to establish a target object model and at least one sub-object model respectively for a target object and at least one sub-object attached to the target object; wherein the target object model is used for describing the target object, and the at least one sub-object model is used for describing the at least one sub-object, and both the target object model and the at least one sub-object model includes a time attribute; a processing module configured to set a value of the time attribute of the target object model and the at least one sub-object model to a first historical time, and establish a first association relationship between the target object model and the at least one sub-object model, wherein the first historical time is used for indicating a time corresponding to data of the target object model and the at least one sub-object model, and the first association relationship is used for associating the at least one sub-object model with the target object model.

In some embodiments, the target object includes a first target entity, and the sub-object includes a sub-entity; or the target object includes a target event, and the sub-object includes a sub-event.

In some embodiments, the first historical time is at least one moment before the current moment or at least one continuous period of time before the current moment.

In some embodiments, when the target object includes a target event, and when the sub-object includes a sub-event, the value of the time attribute in at least one of the sub-object models is within the range of the value of the time attribute in the target object model.

In some embodiments, the first association is used for indicating that the target object model is parent-child with at least one sub-object model.

In some embodiments, when the processing module is used for establishing the first association between the target object model and the at least one sub-object model, it is specifically configured to: identifying the target object model as the parent object model and identifying the at least one sub-object model as a child object model belonging to the parent object model.

In some embodiments, the target object model and at least one sub-object model further include a model identifier, and the model identification is used for uniquely identifying the target object model and at least one sub-object model.

In some embodiments, the target object model and at least one sub-object model further include member attributes that are used for describing user-defined data.

In some embodiments, the target object includes a first target entity, the sub-object includes a sub-entity, and the target object model and at least one sub-object model further include spatial attributes, and the spatial attributes are used for describing one or more of the following information of the target object model and at least one sub-object model: coordinate system information, geometric shape information, spatial position information, spatial rotation angle information, and spatial range information.

In some embodiments, the spatial attribute includes the spatial range information, and the spatial extent information is used for describing the spatial extent in which the target object model and at least one sub-object model are located; the spatial range of at least one sub-object model does not exceed the spatial range of the target object model.

In some embodiments, the processing module is further configured to: establish a first coordinate system in the target object model, establish a second coordinate system in the first sub-object model, the first sub-object model being one of at least one sub-object model, and the origin of the second coordinate system is determined according to the origin of the first coordinate system; determine the spatial position information of the target object model and at least one sub-object model according to the first coordinate system; or determine the spatial position information of the target object model according to the first coordinate system, and determine the spatial position information of at least one sub-object model according to the second coordinate system; determine the geometric shape information of the target object model and at least one sub-object model according to the first coordinate system; or determine the geometric shape information of the target object model according to the first coordinate system, and determine the geometric shape information of the first sub-object model according to the second coordinate system.

In some embodiments, the spatial attribute includes the spatial position information, the target object model and at least one sub-object model further include the position attributes, and the processing module is further configured to: when the spatial position information of the target object changes, the change in the spatial position information is saved to the position attribute in the target object model; the position attribute is used for describing a change in the position of the target object at at least one moment before the current moment, or a change in the position of the object for within at least one continuous period of time before the current moment.

In some embodiments, the processing module is further configured to: when the spatial position of the second sub-object does not belong to the spatial range of the target object, update the first association between the second sub-object model corresponding to the second sub-object and the target object model, and update the spatial properties and time attributes of the second sub-object model; the second sub-object is one of at least one of the sub-objects.

In some embodiments, the processing module is further configured to: generate a parent object record corresponding to the target object model and a sub-object record corresponding to at least one sub-object model and at least one sub-object model through the target object model and at least one sub-object model; the parent object record is used for describing the attribute state of the target object at at least one time before the current moment or within at least one continuous time period before the current moment; the sub-object record is used for describing the attribute state of at least one sub-object at least one time before the current moment or at least one lasting period of time before the current moment.

In some embodiments, the processing module is further configured to: establish a second association relationship between the parent object record and the at least one child object record, and the second association relationship is used for associating the at least one child object record with the parent object record; each child object record corresponds to a unique parent object record, the parent object record and at least one child object record both include a time range, and the time range of the child object record is within the time range of the parent object record.

In some embodiments, when the spatial attribute includes spatial scope information, the parent object record and the child object record are used for describing the change information of the spatial extent of the target object and at least one child object at at least one time before the current moment or within at least one continuous time period before the current moment; at at least one time before the current moment or within at least one continuous period of time before the current moment, the spatial range of the child object record corresponding to at least one child object is included in the space range recorded by the parent object.

In some embodiments, when the spatial attribute includes spatial position information, the parent object record and the child object record are used for describing the change information of the spatial position movement of the target object and at least one child object at at least one time before the current moment or within at least one continuous time period before the current moment; the spatial position of at least one child object is included in the spatial extent recorded by the parent object at at least one moment before the current moment or within at least one continuous period of time before the current moment.

In some embodiments, when the spatial attribute includes the geometric shape information, the parent object record and the child object record are used for describing the change information of the geometric shape of the target object and at at least one child object at least one time before the current moment or within at least one continuous period of time before the current moment; the geometry of at least one child object is contained within the geometry recorded by the parent object at at least one moment before the current moment or within at least one continuous period of time before the current moment.

In some embodiments, the target object includes a target event, the sub-object includes a sub-event, and the creation module is further configured to: establish a second target solid material model for the second target entity, the second target entity material model is used for describing the historical state of the second target entity, and the second target entity material model includes time attributes; the processing module is further configured to: determine the value of the time attribute in the target entity model as a second historical time, and the second historical time is used for representing the time corresponding to the data in the second target entity model; establish a third association between the second target entity model and the target object model, and the third association relationship is used for associating the second target entity model with the target object model.

In some embodiments, the third association is used for indicating that the second target entity physical model has a spatial relationship with the target object model, and the spatial relationship is used for indicating that the target object corresponding to the target object model occurs within the spatial range of the second target entity corresponding to the second target entity model.

In some embodiments, the target object includes a target event, and the sub-object includes a sub-event; the target object model and at least one sub-object model further include spatial attributes, and the spatial properties are used for describing the position information of the target object and at least one sub-object when occurring.

In some embodiments, the spatial properties include a spatial extent and/or a spatial location, wherein the spatial extent of at least one sub-object model is included within the spatial scope of the target object model, or the spatial location of at least one sub-object model is included within the spatial location of the target object model.

In some embodiments, the target object includes a target event, the sub-object includes a sub-event, and the processing module is further configured to: generate a corresponding target event object record based on the target object model corresponding to the time according to the attribute parameters of the target object at different times in history; generate corresponding sub-event object records according to the attribute parameters of at least one sub-object at different times in history, based on the model of at least one sub-object corresponding to the time; the attribute parameter includes at least one of the attribute name, the data type, and the attribute value.

In some embodiments, the processing module is further configured to: establish a fourth association relationship between the target event object record and the record of at least one sub-event object, and the fourth association relationship is used for associating the record of at least one sub-event object with the target event object record; each sub-event object record in at least one sub-event object record corresponds to a unique target event object record, the target event object record and at least one sub-event object record both include a time range, and the time range of the sub-event object record is within the time range of the target event object record.

In the fourth aspect, the present disclosure provides a device for subscribing to a historical state of a target object, including: an establishing module configured to establish a target object model and at least one sub-object model respectively for a target object and at least one sub-object attached to the target object; wherein the target object model is used for describing the target object, and the at least one sub-object model is used for describing the at least one sub-object, and both the target object model and the at least one sub-object model include a time attribute; a processing module configured to set a value of the time attribute of the target object model and the at least one sub-object model to a first historical time, and establish a first association relationship between the target object model and the at least one sub-object model, wherein the first historical time is used for indicating a time corresponding to data of the target object model and the at least one sub-object model, and the first association relationship is used for associating the at least one sub-object model to the target object model; a receiving module configured to receive a first request from a terminal device, wherein the first request is used for requesting a subscription to the historical state of the target object; a response module configured to perform a subscription operation on the target object model in response to the first request and perform a subscription operation on the at least one sub-object model according to the first association relationship between the at least one sub-object model and the target object model.

In the fifth aspect, the present disclosure provides an electronic device, including: at least one processor, and a memory communicatively connected to the at least one processor; the memory stores instructions that are executed by the at least one processor, and the at least one processor executes the instructions stored in the memory to implements the method of any one of the first aspect, any of embodiments of the first aspect, the second aspect or any of embodiments of the second aspect.

In the sixth aspect, the present disclosure provides a computer-readable storage medium, configured to store instructions, wherein in a case that the instructions are executed, the method of any one of the first aspect, any of embodiments of the first aspect, the second aspect or any of embodiments of the second aspect is implemented.

The technical effects or advantages of one or more of the technical solutions provided in the third, fourth, fifth and sixth aspects of the embodiments of the present application may be interpreted by the technical effects or advantages of one or more of the corresponding technical solutions provided in the first and second aspects.

### Brief Description of Figures

In order to more clearly illustrate the technical solutions in the embodiments of the present disclosure, the following will briefly introduce the drawings needed to describe the embodiments. Obviously, the drawings in the following description are only some embodiments of the present disclosure. Those of ordinary skill in the art can also obtain other drawings based on these drawings without exerting any creative effort.
FIG. 1 is a flow chart of a method for twinning the historical state of a target object provided by an embodiment of the present disclosure;
FIG. 2 is a schematic diagram of time ranges of the target event and sub-event provided by the embodiment of the present disclosure;
FIG. 3 is a schematic diagram of a possible association between physical objects provided by an embodiment of the present disclosure;
FIG. 4 is a schematic diagram of a member structure provided by an embodiment of the present disclosure;
FIG. 5 is a flow chart of a method for assigning values to spatial attributes provided by an embodiment of the present disclosure;
FIG. 6 is a flow chart of another method of assigning values to spatial attributes provided by an embodiment of the present disclosure;
FIG. 7 is a flow chart of a method for twinning the historical state of a second target entity provided by an embodiment of the present disclosure;
FIG. 8 is a flow chart of a method for subscribing to the historical state of a target object provided by an embodiment of the present disclosure;
FIG. 9 is a flow chart of a method for querying the historical state of a target object provided by an embodiment of the present disclosure;
FIG. 10 is a flow chart of a method for deleting the historical state of a target object provided by an embodiment of the present disclosure;
FIG. 11 is a schematic structural diagram of a device that twins a historical state of a target object according to an embodiment of the present disclosure;
FIG. 12 is a schematic structural diagram of a device for subscribing to the historical state of a target object according to an embodiment of the present disclosure;
FIG. 13 is a schematic structural diagram of an electronic device provided by an embodiment of the present disclosure.

### Detailed Description

The technical solution of the present disclosure is described in detail below through the accompanying drawings and specific examples. It should be understood that the embodiments of the present disclosure and the specific features in the embodiments are a detailed description of the technical solution of the present disclosure, rather than a limitation of the technical solution of the present disclosure. If there is no conflict, the embodiments of the present disclosure and the technical features in the embodiments can be combined with each other.

It should be understood that in the description of the embodiments of this disclosure, terms such as "first" and "second" are only used for the purpose of distinguishing the description, and cannot be understood as indicating or implying relative importance, nor can they be understood as indicating, or suggestive order. In the description of the embodiments of this disclosure, "multiple" means two or more.

The term "and/or" in the embodiments of this disclosure is only a first association relationship describing associated objects, indicating that there can be three relationships, for example, A and/or B, which can mean: A exists alone, and exists simultaneously A and B, there are three situations of B alone. In addition, the character "/" in this article generally indicates that the related objects are an "or" relationship.

In the field of digital twins, the historical state of various objects in the objective world can be twinned into historical data of the objects. For example, physical objects have spatial properties, which can be identified through geometric shapes and collection locations, and the spatial information of each past moment of the physical objects and other attributes of the physical objects can be used to represent the historical state of the physical objects. Twining this information into a unified data structure is a digital twin of the historical state of the physical objects. For another example, when it is necessary to digitally twin various events that occur in the objective world, the historical state of the events in the objective world can be twinned into historical data corresponding to the events, and the various attributes of each past time in the historical data can be used to identify the historical state of an event. Moreover, there are built-in correlations between different events, and these correlations can also be digitally twinned to achieve more effective management of data after event twins.

Based on the above ideas, this disclosure provides a method of twinning the historical state of target objects.

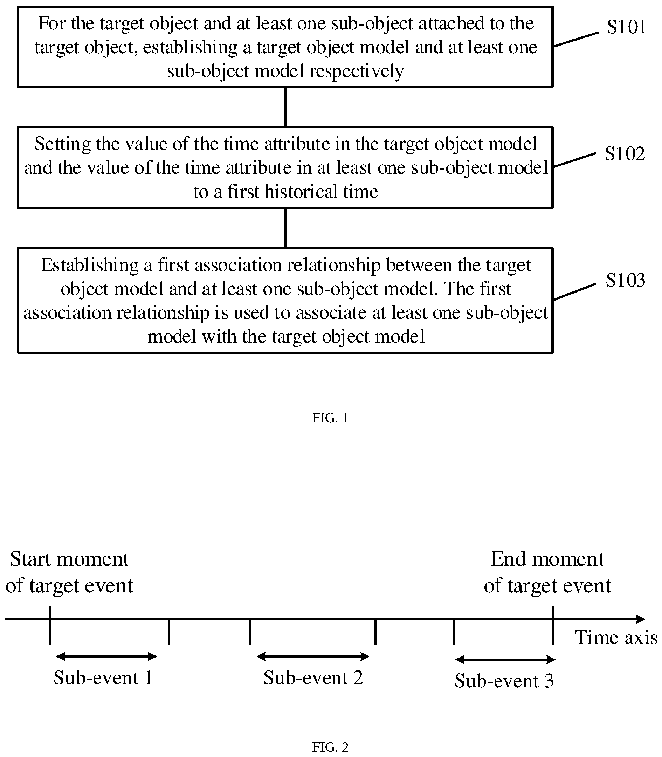

Referring to FIG. 1, which is a flow chart of a method for twinning the historical state of a twin target object provided by an embodiment of the present disclosure. The execution subject of this method can be various types of devices with computing functions, such as laptop computers, desktop computers, servers, etc., and can also be various types of mobile terminal devices, such as mobile phones, platforms, and other terminal devices that can implement computing functions. It should be understood that the above devices are only examples and are not limited in this disclosure. The specific steps of this method are as follows.

Step S101: For the target object and at least one sub-object attached to the target object, establishing a target object model and at least one sub-object model respectively.

The target object may include a first target entity or a target event. Further, when the target object includes the first target entity, its corresponding sub-object includes a sub-entity, and when the target object includes the target event, its corresponding sub-object includes a sub-event.

For the above different combinations of target objects and sub-objects, the following will introduce the affiliation relationships between the first target entity and sub-entity, and the target event and the sub-event.

First, the affiliation relationship between the first target entity and the sub-entity may be a relationship between the whole and a part, or a relationship between inclusion and being included. For example, the first target entity may refer to workshop A, and the sub-entities attached to the first target entity may be machine 1, machine 2, machine 3, etc., in workshop A, embodying the relationship between the first target entity and the sub-entities is the relationship between inclusion and being included. For another example, the first target entity may refer to a truck, and the sub-entities corresponding to the first target entity are the semi-trailers, front wheels, tires, etc., which are towed by the truck, reflecting the relationship between the first target entity and the sub-entities is the relationship between the whole and a part.

When the target object includes the first target entity, the target object model correspondingly created for the target object may also be called the first target entity model, and the sub-object model correspondingly created for the sub-object may also be called the sub-entity model.

Second, the affiliation relationship between the target event and the sub-events can be a belonging relationship. In other words, there is a conceptual whole-part relationship between the target event and at least one sub-event. For example, assume that the target event is a leave event, and the leave event as a whole can be split into several different sub-events, for example: Sub-event 1: the leave applicant initiates a leave application; Sub-event 2: the department head approves the leave application; Sub-event 3: the manager approves the leave application. Therefore, conceptually, these three sub-events are subsidiary events of the target event.

Correspondingly, when the target object includes a target event, the target object model correspondingly created for the target object can also be called the target event model, and the sub-object model correspondingly created for the sub-object can also be called a sub-event model.

The above is the meaning of the affiliation relationship between these objects when the target object contains objects of different types. For the solution proposed by the embodiments of the present disclosure, the target object model corresponds to the above-mentioned target object and is used to describe the historical state of the target object. At least one sub-object model corresponds to the above-mentioned at least one sub-object and is used to describe the historical state of at least one sub-object. Each of these object models includes time attributes, which are used to describe the time corresponding to the data in the object model.

It should be noted that the existence forms of created objects can include different types. For example, the data can be stored in the form of a data table, or it can be stored in the form of an image, or it can be stored in other possible data storage forms, which is not limited by this disclosure.

Step S102: Setting the value of the time attribute in the target object model and the value of the time attribute in at least one sub-object model to a first historical time. The first historical time is used to indicate the time corresponding to the data in the target object model and at least one sub-object model.

Optional, in various object models, the time attribute is used to describe the time corresponding to the historical data in the object models.

For example, for the physical object model, the time attribute is used to describe the time corresponding to the historical data in the physical object model. For example, for workshop A, the first historical data of its corresponding object model may be the record of workshop A being put into use, and the time corresponding to this record is the time when workshop A was put into use. At this time, the record corresponding to the value of the time attribute may be: January 1, 2020. For another example, a piece of data in the model corresponding to workshop A represents the appearance of a new machine in workshop A. Therefore, the value of the time attribute corresponding to the record may be: June 1, 2020.

For the event model, the time attribute can be used to describe the occurrence or duration of each event. For example, assuming that the target event is a leave event, the time attribute in the corresponding event model can be the time of the entire process of the leave event from the initiation of the request to the end of the approval, such as: January 1, 2020 to January 2, 2020. For another example, the value of the time attribute of the event model corresponding to the sub-event 1 of at least one sub-event (the person requesting leave initiates a leave application) can be from 10:00 on January 1, 2020 to 12:00 on January 1, 2020.

In this way, users can learn the time corresponding to each historical data through the time attributes in these object models, thereby more clearly obtaining the historical state of the objects corresponding to the object model and their corresponding information, and strengthening the management for the information of various target objects..

Optionally, the first historical time may be at least one time before the current time or at least one duration period before the current time.

For example, when the target object model is created for the workshop A, the first historical time corresponding to the historical data recording the put into use of workshop A can be recorded as a certain moment on January 1, 2020, or it can is recorded for the entire duration of January 1st. Which first historical time to record specific historical data can be selected according to actual needs, and is not limited in this disclosure.

When the target object model is created for the target event, in the sub-object model associated with the target object model, the value of time attribute is within the range of the value of the time attribute in the target object model.

For example, as shown in FIG. 2, which is a schematic diagram of the time range of the target event and sub-events provided by the embodiments of the present disclosure. As shown in FIG. 2, the time duration from the start moment to the end moment of the target event covers the duration time of sub-event 1, sub-event 2 and sub-event 3.

Optionally, various object models may also include data time attributes, which are used to describe the time when historical data in the object model was recorded or modified.

For example, the first piece of historical data of the above-mentioned workshop A is used as an example for explanation. Although the time attribute corresponding to the historical data of workshop A indicates that the workshop was put into use on January 1, 2020, since the creation of the object model occurred on January 1, 2022, this historical data corresponds to the value of the data time attribute is January 1, 2022. Taking the above leave event as an example to illustrate: although the value of the time attribute of the object model may be January 1, 2020 to January 2, 2020, the creation time of the object model may be later than the time when the event occurs (for example, February 1, 2020), so for the data time attribute in the object model, its value is February 1, 2020.

In addition, for some historical data, incorrect revisions may occur. For example, during a certain error determination, it is found that the value in a piece of historical data in the model has an error. It can be modified, and at this time, the value of the data time attribute corresponding to the historical data will also be updated in time to indicate the latest revision time of the historical data.

In this method, through the data time attribute, historical data can be more accurately displayed to users, and the update state of historical data can be displayed, which improves the user's ability to manage object information in a refined manner.

Step S103: Establishing a first association relationship between the target object model and at least one sub-object model. The first association relationship is used to associate at least one sub-object model with the target object model.

Specifically, in view of the association relationship between the target object and at least one sub-object in reality, a first association relationship between the target object model and at least one sub-object model is established. The first association relationship is used to associate the at least one sub-object model to the target object model.

For example, in order to make it easier to clarify the meaning of the first association relationship, the following will introduce the first association relationship respectively for entities and events.

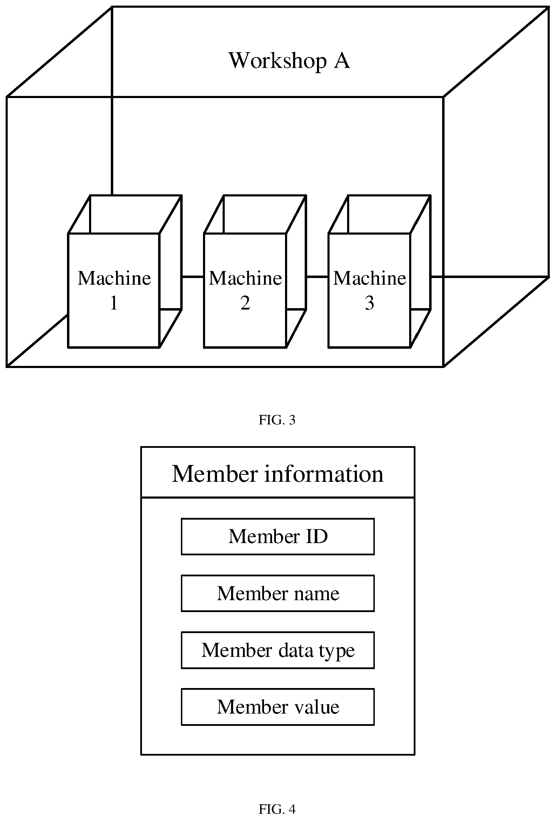

As shown in FIG. 3, which is a schematic diagram of a possible association relationship between entities provided by an embodiments of the present disclosure. In FIG. 3, there is workshop A and machine 1, machine 2, and machine 3 included in workshop A. Assume that the workshop A is the target physical object. Then, after creating the physical object model, the first association between the target physical model corresponding to workshop A and the sub-physical physical models 1, 2, and 3 corresponding to machines 1, 2, and 3 can be established according to the including-included relationship between the workshop A and machines 1, 2 and 3. The first association relationship is used to associate the sub-entity object models 1, 2, and 3 with the target entity object model.

For real-life events, taking the above leave event as an example, the leave event can be split into three sub-events. Therefore, for the target object model and three sub-object models created for the above leave event and the three sub-events, a first association relationship between models can be created based on the whole-part relationship between the leave event and the three sub-events. The first association relationship can be used to associate the sub-object model to the target object model.

Optionally, the first association relationship may be used to indicate that the target object model and at least one sub-object model are in a parent-child relationship (or include and be included, whole and part, etc.). Among them, the target object model is identified as the parent model, and at least one sub-object model is identified as the child model. The above parent-child relationship is used to indicate that the child model is subordinate to the parent model. Corresponding to reality, it means that the sub-object is subordinate to the target object.

In this solution, various target objects can be digitally twinned according to the conditions of the target objects to obtain their corresponding object models. In this way, by creating models for each object, the user can be provided with information about each object and realize the digital management of target objects. At the same time, the time corresponding to each historical data in the object model is recorded through the time attribute, making the information stored in the object model more accurate and comprehensive. Moreover, the associations between object models can be created based on the hierarchical relationships between objects in reality. In this way, through the associations between object models, the user is provided with information about the relationships between objects in reality, which improves the efficiency of users in managing target objects.

Optionally, each object model created above also includes a model identifier, which is used to uniquely identify the corresponding object model.

For example, the model identifier may be a numeric sequence with a fixed length. For example, each object model can be uniquely identified by a 6-digit identity number (Identity, ID). The unique identifier of the target object model corresponding to the target object can be recorded as 000010, and the unique identifier of sub-object model 1 corresponding to sub-object 1 can be recorded as 000110, the unique identifier of sub-object model 2 corresponding to sub-object 2 can be recorded as 000210, and the unique identifier of sub-object model 3 corresponding to sub-object 3 can be recorded as 000310. In this way, each object model can have an unique model identification.

In this method, each model has its own system-wide unique model identifier, which enables accurate search of the model during subsequent access and improves the efficiency of model management.

Optionally, each model created above also includes a member attribute, which is used to describe user-defined data.

Specifically, the member attribute of the model can contain several members. The so-called member refers to a data structure. Information about the differentiated attributes of all objects (entities or events) can be stored through the data structure and saved in a model corresponding to the data structure.

For example, as shown in FIG. 4, which is a schematic diagram of a member structure provided by an embodiments of the present disclosure. In FIG. 4, the member includes different member information, such as member ID, member name, member data type, member value, etc. Through this structured data information, users can add corresponding member information to different physical object models. For example, in the target physical model corresponding to workshop A, member information describing the number of people in the workshop or member information describing the number of machines in the workshop can be added. According to the member structure shown in FIG. 4, the member information used to describe the number of people in the workshop and the member information used to describe the number of machines in the workshop can be expressed as data as shown in Table 1.

**Table 1**

| Member ID | 0001 | 0002 |
|---|---|---|
| Member name | The number of people in workshop | The number of machines in workshop |
| Member data type | INT | INT |
| Member value | 20 | 4 |

In this method, users can save the differentiated information of each object (entity or event) in its corresponding model through member attributes, avoiding that the overall model is modified due to the specificity of a single object (entity or event), which improves the adaptability and practicality of this solution.

The above introduces the steps that can be performed when creating a model, whether for physical objects or events. In the face of different characteristics between entities and events, the following will introduce how to create models based on the characteristics of entities or events.

First, the steps that can be performed when creating an object model and the target object includes the first target entity and the sub-object includes the sub-entity.

Optionally, when creating models for physical objects, the various object models created also include spatial attributes, which are used to describe one or more of the following information of the target object model and at least one sub-object model: coordinate system information, geometric shape information, spatial position information, spatial rotation angle information, and spatial range information.

Among them, the coordinate system information is used to indicate the information of the specifically selected reference coordinate system of the object model. The spatial position information is used to indicate the position information of the object corresponding to the object model, and the geometric shape information is used to indicate the shape of the object corresponding to the object model. The spatial range information is used to indicate the spatial range information where the object corresponding to the object model is located. Among them, it should be noted that the spatial range of at least one sub-object model does not exceed the spatial range of the target object model.

Optionally, based on the information contained in the above spatial attributes, the first association relationship between the object models also includes the geometric relationship between the geometric shapes of the entity objects and the spatial relationship between the spatial positions at the past moment.

Among them, the geometric relationship between the geometric shapes of the physical objects is used to indicate the intersection, separation, contact and other relationships between the physical objects. It can also indicate the distance between the physical objects and other data.

The spatial relationship between the spatial positions of physical objects is used to indicate that the physical objects corresponding to the object model are spatially related to each other, such as inclusion, separation, contact, etc. It is also used to indicate there is a certain spatial distance between the physical objects corresponding to the object model.

Through the above method, the spatial attributes are added to the object model, making the object information contained in the object model more comprehensive and complete. At the same time, the association relationship between object models also includes geometric relationships and spatial relationships, which makes the connection between each object model closer and helps to achieve rapid search and other management of object models.

Optionally, the values of spatial attributes in each object model can be accomplished in the following different ways.

Method 1. Single coordinate system.

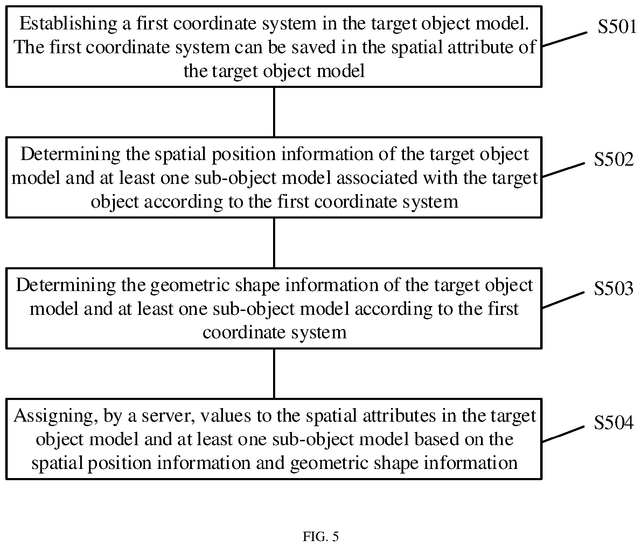

Referring to FIG. 5, which is a flow chart of a method for assigning values to spatial attributes provided by an embodiment of the present disclosure.

Step S501: Establishing a first coordinate system in the target object model. The first coordinate system can be saved in the spatial attribute of the target object model.

Step S502: Determining the spatial position information of the target object model and at least one sub-object model associated with the target object according to the first coordinate system.

Step S503: Determining the geometric shape information of the target object model and at least one sub-object model according to the first coordinate system.

Step S504: Assigning, by a server, values to the spatial attributes in the target object model and at least one sub-object model based on the spatial position information and geometric shape information.

In this method, the server assigns values to the spatial attributes of the target object and the sub-object model associated with the target object model only based on the first coordinate system in the target object model. In this way, the target object and sub-objects have a unified reference coordinate system, so that the relationship between their relative positions is displayed more intuitively and closely, further strengthening the correlation between the target object model and the sub-object model, and improving the management efficiency of the object model.

Method 2. Dual coordinate system.

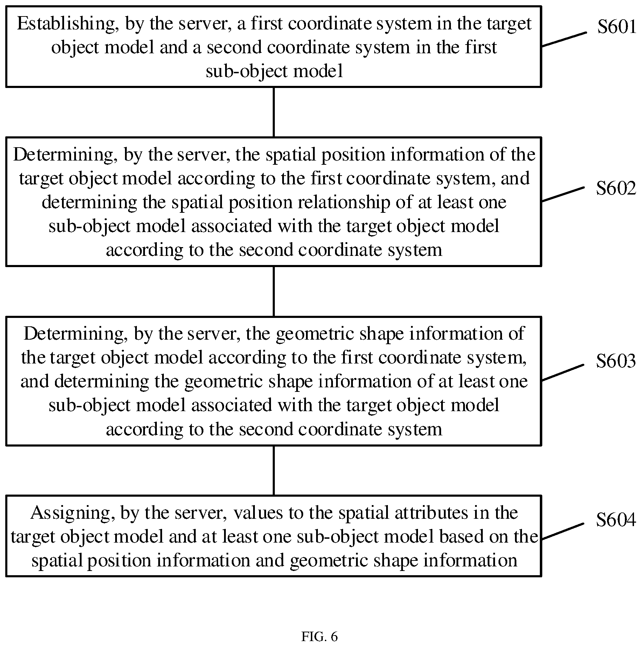

Referring to FIG. 6, which is a flow chart of another method of assigning values to spatial attributes provided by an embodiment of the present disclosure.

Step S601: Establishing, by the server, a first coordinate system in the target object model and a second coordinate system in the first sub-object model; the first sub-object model is one of the above-mentioned at least one sub-object model, and the origin of the second coordinate system is determined based on the origin of the first coordinate system.

Step S602: Determining, by the server, the spatial position information of the target object model according to the first coordinate system, and determining the spatial position relationship of at least one sub-object model associated with the target object model according to the second coordinate system.

In this way, the spatial position information of all sub-object models associated with the target object model is determined based on the same reference coordinate system, which is more conducive to the management of the sub-object models.

Step S603: Determining, by the server, the geometric shape information of the target object model according to the first coordinate system, and determining the geometric shape information of at least one sub-object model associated with the target object model according to the second coordinate system.

Step S604: Assigning, by the server, values to the spatial attributes in the target object model and at least one sub-object model based on the spatial position information and geometric shape information.

In this method, the server establishes the first coordinate system and the second coordinate system in the target object model and the sub-object model respectively, and the origin of the second coordinate system is established based on the origin of the first coordinate system. In this way, after being assigned the values, the spatial attributes of the various models not only retain built-in correlations, but also have a certain degree of independence, which improves the degree of refined management of object models.

Optionally, the above various types of object models also include position attributes, which are used to describe the position change of the target object at least one moment before the current moment, or the position change within at least one duration period before the current moment.

For example, when the server assigns a value to the position attribute in the model, the change in the spatial position information can be saved in the target object model as the spatial position information of the first target entity changes. Similarly, when the spatial position information of the sub-entity changes, the server can also save the corresponding information in the sub-object model corresponding to the sub-entity.

In this method, the position changes of physical objects are recorded through position attributes, which improves the data retained in the object model and improves the level of managing the object model.

Optionally, when the spatial position of the second sub-entity among the at least one sub-entity changes and moves out of the spatial range of the target entity, the server updates the first association relationship between the second sub-entity model corresponding to the second sub-entity and the target entity model, and updates the spatial attributes and time attributes of the second sub-entity model to ensure that the position change is recorded in the second sub-entity model.

Taking workshop A as the target entity as an example, machine 1 in workshop A is the second sub-entity mentioned above. When the machine 1 has a record of being transferred from the workshop A to another workshop, the server can update the first association relationship between the target entity model corresponding to the workshop A and machine 1 and the second sub-entity model, and simultaneously update the spatial attributes and time attributes of the second sub-entity model to ensure that the record can be successfully saved in the second sub-entity model.

Optionally, when twinning the historical state of the first target entity or at least one sub-entity, the object records corresponding to each object model at least one moment or at least one duration period can also be generated before the current moment through a target object model or at least one sub-object model corresponding to the first target entity or at least one sub-entity.

Among them, the object record generated through the target object model can be marked as a parent object record, which is used to describe the attribute state of the target object at least one moment or at least one duration period before the current moment. The object record generated by at least one sub-object model may be called a sub-object record and is used to describe the attribute state of the at least one sub-object at least one moment or at least one duration period before the current moment.

For example, a parent object record describing the historical state is generated through the historical state included in the established target object model, and the record contains the values of each attribute in the historical state corresponding to the target object model. For example, a parent object record is generated based on the historical state of the establishment of workshop A. The parent object record contains the time when workshop A was put into use, the spatial location of workshop A, the workshop personnel included when workshop A was put into use, etc.

In this method, the corresponding object record is generated through the model, so that the user can obtain unified and standardized historical state information about the object, which improves the user experience and reduces the complexity of obtaining information.

Optionally, for the generated parent object record and at least one child object record, the following processing method can also be performed: establishing a second association relationship between the parent object record and at least one child object record, and the second association relationship is used to associate at least one child object record with the parent object record, or the second association relationship is also used to indicate that the physical object model corresponding to the parent object record has a first association relationship with at least one child object record corresponding to at least one child entity model.

Each child object record in at least one child object record has a unique parent object record, which includes a time range attribute used to indicate the time range in which the attribute state corresponding to each record lasts. Moreover, the time range of each child object record in at least one child object record is within the time range of the parent object record.

In this method, the generated parent object record and the child object record are connected, which can implement the correlation between physical entities, strengthen the correlation between objects and information, and improve the efficiency of object information management.

Optionally, when the spatial attributes of the target object model include spatial range information, the parent object record corresponding to the target object model and the child object record corresponding to at least one child object model are used to describe change information of the spatial range of the target object and at least one child object within at least one moment before the current moment or at least one duration period before the current moment.

It should be noted that at least one moment before the current moment or at least one duration period before the current moment, the spatial range of the child object record is included in the spatial range of the parent object record.

In this method, the object record contains the changes in the spatial range of the corresponding physical object, which can effectively help the user obtain the corresponding information.

Optionally, when the spatial attributes of the target object model include spatial position information, the parent object record corresponding to the target object model and the child object record corresponding to at least one child object model are also used to describe the change information of spatial position movement of the target object and at least one child object at least one moment before the current moment or at least one duration period before the current moment.

It should be noted that at least one moment before the current moment or at least one duration period before the current moment, the spatial position of at least one child object is included in the spatial range recorded by the parent object.

In this method, the object record contains the spatial position changes of the corresponding object, which can effectively help the user obtain the corresponding information.

Optionally, when the spatial attributes of the target object model contain geometric shape information, the parent object record corresponding to the target object model and the child object record corresponding to at least one child entity model are used to describe change information of the geometric shape of the target object and at least one child object at least one moment before the current moment or at least one duration period before the current moment.

It should be noted that at least one moment before the current moment or at least one duration period before the current moment, the geometric shape of the child object record is included in the geometric shape of the parent object record.

In this method, the object record contains the geometric shape changes of the corresponding physical object, which can effectively help the user obtain the corresponding information.

The above describes the method steps that can be performed when the target object includes the first target entity. The following will introduce the steps that can be performed when creating a model when the target object includes target events and the sub-objects include sub-events.

It should be understood that in the real world, the occurrence of events is usually related to physical objects. Therefore, when creating a model for an event, the model can also be created for the physical objects related to the event. In order to make an illustrative distinction from the first target entity object that the above-mentioned target object may include, the entity objects related to the event introduced below will be recorded as the second target entity object. It should be noted that the second target entity refers to an entity related to the target event included in the target object, and the above-mentioned first target entity can be any entity. In other words, to a certain extent, the first target entity may include the second target entity.

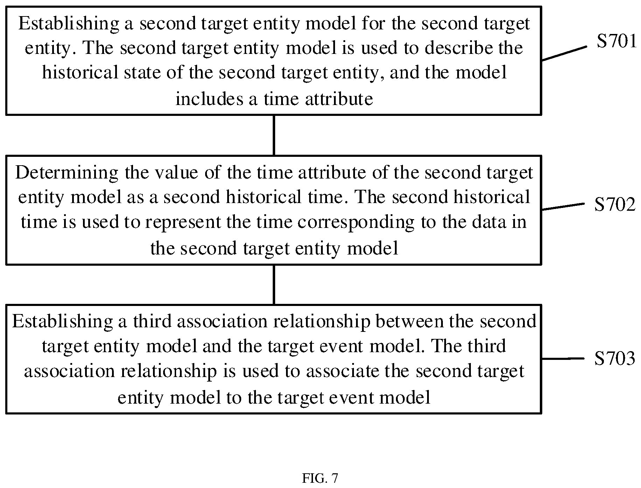

Referring to FIG. 7, a flow chart is provided for a method of twinning the historical state of a second target entity provided by an embodiment of the present disclosure. The specific steps of the method are as follows.

Step S701: Establishing a second target entity model for the second target entity. The second target entity model is used to describe the historical state of the second target entity, and the model includes a time attribute.

Step S702: Determining the value of the time attribute of the second target entity model as a second historical time. The second historical time is used to represent the time corresponding to the data in the second target entity model.

The value of the time attribute of the second target entity model is used to describe the time corresponding to the data existing in the second target entity model. For example, assuming that the second target entity is a laptop, when there is certain historical data in the second target entity model corresponding to the second target entity, which records the information that the entity was put into use. Then, the value of the time attribute corresponding to the data is the time when the entity was put into use, rather than the time when the historical data was recorded.

Step S703: Establishing a third association relationship between the second target entity model and the target event model. The third association relationship is used to associate the second target entity model to the target event model.

It should be understood that the specific steps for creating the second target entity model are similar to the specific steps for creating the target object model, and will not be described again here.

Specifically, after the second target entity model is created, a third association relationship between the second target entity model and the target object model is established based on the association relationship between the second target entity object and the target event in reality. For example, assume that the second target entity is factory A, and the target object is a leave event that occurred in factory A. At this time, the second target entity has a spatial relationship with the target object, and the spatial relationship indicates the occurrence of the target object is within the spatial range of the target entity. Therefore, after the second target entity model and the target event model are created, a third association relationship between the second target entity model and the target object model is established based on the space management, and the second target entity model is associated with target object model.

In this method, a second target entity model associated with the target object model is created, which improves the scheme of twinning the historical state of the event, strengthens the comprehensiveness of the information stored in the model, and improves the management efficiency of event information.

Optionally, the above-mentioned object model created for various types of events also includes spatial attributes, which are used to describe the target event and the location information when at least one sub-event occurs.

For example, taking the above target event as a leave event and at least one sub-event as sub-events 1, 2 and 3 split from the leave event, the location when the leave event occurs may be factory A, and the location when the sub-event occurs may be workshop A, and the administration building respectively. These location information are correspondingly stored in the created object model to complete the description of the events that occurred in the data of the model.

Optionally, the spatial attributes in the above model may include spatial range and/or spatial location. Among them, the spatial range recorded in the child object model is included in the spatial range of the parent model corresponding to the child object model, or in other words, the spatial position recorded in the child object model is included in the range of the spatial position of the parent model corresponding to the child object model.

Optionally, when twining the historical states of the target object model, at least one sub-object model and the second target entity model, the object record corresponding to the target event can also be generated based on the attribute parameters of the target event at different times in history and target object model corresponding to the target event. Then, the object record corresponding to sub-event is generated based on according to the attribute parameters of the at least one sub-object model at different times in history and at least one sub-object model corresponding to the times. The attribute parameters include at least one of attribute name, data type, or attribute value.

For example, the object record of a target event describing the historical state is generated through the historical state included in the established target object model. The object record includes the values of each attribute in the historical state corresponding to the target object model. For example, the object record of the target event may include the time, spatial location and spatial range of the leave event.

In this method, the corresponding object record is generated through the model, so that the user can obtain unified and standardized historical state information about the object, which improves the user experience and reduces the complexity of obtaining information.

Optionally, for the generated object record of the target event and the object record of at least one sub-event, the following processing methods can also be performed.

A fourth association relationship between the object record of target event and the object record of at least one sub-event is established, and the fourth association relationship is used to associate the object record of at least one sub-event with the object record of target event.

Among them, each sub-event object record in the object record of at least one sub-event has only one object record of target event, and all object records include the attribute of time range, which is used to indicate the time range of how long the attribute state corresponding to each record lasts. Further, the time range in the object record of sub-event is within the time range of the object record of the target event.

In this method, the generated object record of target event is connected with the object record of sub-event, which can implement the correlation between objects, strengthen the correlation between objects and information, and improve the efficiency of object information management.

The above introduces the solution of twinning the historical state of objects (i.e. entities or events) by establishing an object model. Based on the same inventive concept, several possible applications of the established model are introduced below.

Application 1. Historical state of subscription objects.

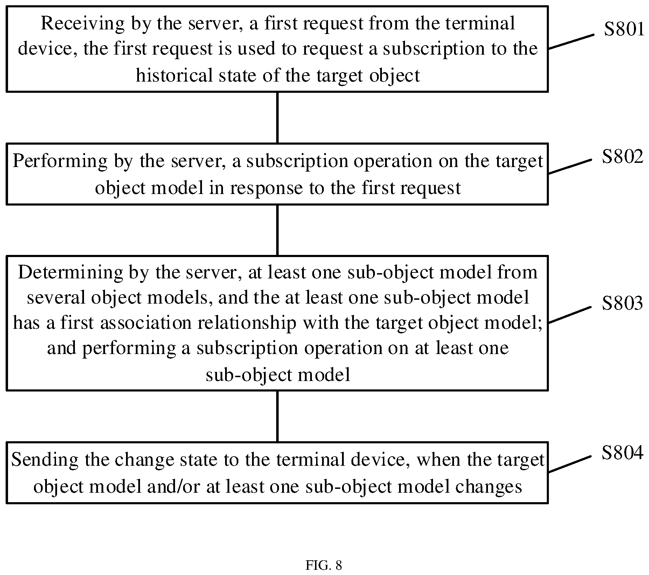

Referring to FIG. 8, which is a flow chart of a method for subscribing to the historical state of a target object provided by an embodiment of the present disclosure. This method is jointly executed by devices such as computers and servers that are connected to the terminal device through communication. For ease of explanation, the specific implementation steps of this method will be described below by taking the server and the terminal device as examples.

Step S801: Receiving by the server, a first request from the terminal device, the first request is used to request a subscription to the historical state of the target object.

The first request may carry information used to determine the target object model, and the information may specifically be: the model identifier of the target object model, or the value of one or more attributes of the target object model, or the model identifier of the object model and the value of one or more attributes of the target object model.

For example, when the terminal device needs to subscribe to the target object model, it can send a first request to the server. The first request carries the model identifier of the target object model. After the server receives the first request, it can complete the process of subscription operation to the target object model according to the model identifier.

In this way, the server can determine the target object model from several object models through the information carried in the first request. These object models are stored in the database corresponding to the server (after creating several object models, these object models can be stored in the database corresponding to the server, thus ensuring the reliability of subsequent information queries).

Step S802: Performing by the server, a subscription operation on the target object model in response to the first request.

For example, the subscription operation may be to save the identification information of the subscribed target object model in a corresponding subscription data table, and the subscription data table records the identification information of all subscribed object models.

Still taking the target object model as an example, after receiving the first request to subscribe to the target object model, the server saves the model identifier of the target object model to the subscription data table to implement the subscription in response to the first request to achieve the subscription to the target object model.

Step S803: Determining by the server, at least one sub-object model from several object models, and the at least one sub-object model has a first association relationship with the target object model; and performing a subscription operation on at least one sub-object model.

Exemplarily, after determining the target object model, the server obtains relevant information about the first association relationship between the target object model and at least one sub-object model from the target object model, and determine at least one of the above sub-object models from several object models based on the information about the first association relationship, that is, sub-object model 1, sub-object model 2, and sub-object model 3, and then subscribes to these three object models. Similarly, when the first request received by the server is for subscribing to the sub-object model 1, according to the information related to the first association in the sub-object model 1, the server can determine the target object model based on the first association, and subscribe to the target object model. In other words, the server can determine and subscribe to the child model from the parent model based on the association relationship, or it can determine and subscribe to the parent model from the child model based on the association relationship.

Step S804: Sending the change state to the terminal device, when the target object model and/or at least one sub-object model changes.

After completing the subscription to the target object model and at least one sub-object model, the server will detect the data state of these models. Once the data of the target object model and/or at least one sub-object model changes, or the sub-object model changes, the server immediately sends the above changes to the terminal device. Among them, the change of the sub-object model is used to indicate the change in the number of sub-object models that have the first association relationship with the target object model. Taking the target object model as workshop A as an example, when some machines in the workshop A are eliminated, the number of machines existing in the workshop A will change. At this time, the number of sub-object models that have the first association relationship with the target entity model will also change. At this time, it means that the sub-object model has changed.

In this solution, based on the existence of a first association between models, after subscribing to the target object model, the same subscription operation can be performed on at least one associated sub-object model based on the association in the target object model. In this way, the user only needs to issue an instruction to subscribe to the target object model, and can subscribe to the models associated with the target object model at the same time, and obtain the change information of these models in a timely manner. More comprehensive information can be obtained with simple operations, which improves the intelligence of subscription operations.

It should be noted that the above only takes the first association relationship between models as an example. When the target object includes a target event, the corresponding target object model created by the target object may also include the third relationship between the second target entity model and the corresponding target object model. Therefore, in practical applications, the above subscription process can also be performed based on the third association relationship between the target object model and the second target entity model, or simultaneously based on the first association relationship and the third association included in the target object model, that is, after requesting to subscribe to the target object model, subscribing to at least one sub-object model and the second target entity model at the same time.

Optionally, when the server sends changes to the terminal device, it can choose to send it in the following ways.

When the target object model and/or at least one sub-object model changes, subscription information matching the subscription item is generated. The subscription item is carried in the first request. The subscription information is sent to the terminal device.

Among them, the subscription items carried in the first request can be the names of various attributes included in the object model, such as spatial attributes or position attributes, etc., they can also be part of the information in the object model that the user needs to focus on, such as name of the member in the member attribute.

In this way, when the data in the object model changes, the server can generate subscription information based on the subscription items included in the first request. For example, the subscription items carried in the first request only include spatial attributes. When the spatial attributes of the target object model and/or at least one sub-object model change, the subscription information generated by the server may be subscription information only used to indicate changes in the spatial attributes of the target object model and/or at least one sub-object model.

In this method, the server sends corresponding subscription information to the terminal device based on the subscription item carried in the first request, which can not only meet the user's subscription needs, but also avoid tracking other model information, and realize delicacy management for the object information.

Application 2. Query the historical state of the target object.

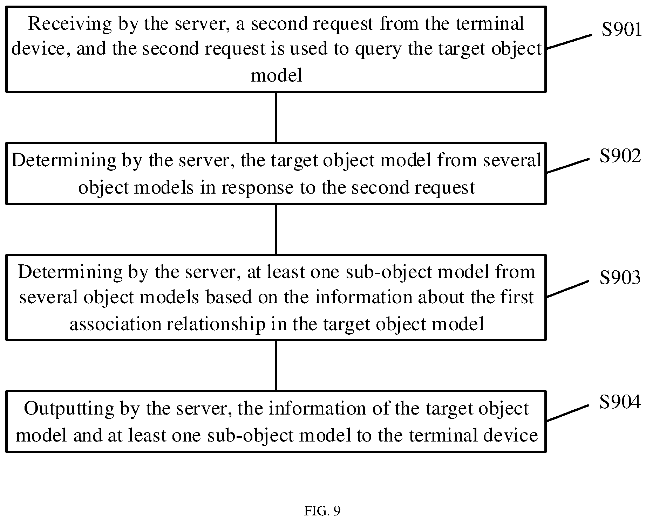

Referring to FIG. 9, which is a flow chart of a method for querying the historical state of a target object provided by an embodiment of the present disclosure. The specific steps of this method are as follows.

S901: Receiving by the server, a second request from the terminal device, and the second request is used to query the target object model.

Similar to the Application 1, the second request may carry information used to determine the target object model, and the information may specifically be: the model identifier of the target object model, or the value of one or more attributes in the target object model, or the model identifier of the target object model and the value of one or more properties in the target object model.

Step S902: Determining by the server, the target object model from several object models in response to the second request.

Step S903: Determining by the server, at least one sub-object model from several object models based on the information about the first association relationship in the target object model. The entity corresponding to the at least one sub-object model and the entity corresponding to the target object model have the first associated relationship.

Step S904: Outputting by the server, the information of the target object model and at least one sub-object model to the terminal device.

In this way, the server can determine the child model from the parent model based on the first association relationship between the target object model and at least one sub-object model, and simultaneously transmit at least one sub-object model to the terminal device to complete the response to the second request.

In this method, the user only needs to input the query information of one object model to obtain the information of several object models associated with the object model, which simplifies the user's query operation and improves the user experience.

Optionally, the second request may also carry a query item to instruct the server to provide feedback based on the corresponding query item.

For example, the query item may be a spatial attribute and/or member attribute in the object model, and when receiving the second request containing the query item, the server determines the information of the spatial attribute and/or member attribute from the determined target object model, and generates and sends corresponding query information to the terminal device.

In this method, through the restriction of query items, the information in the object model can be sent in a targeted manner, which improves the refinement of the object model management.

Application 3. Delete the historical state of the target object.

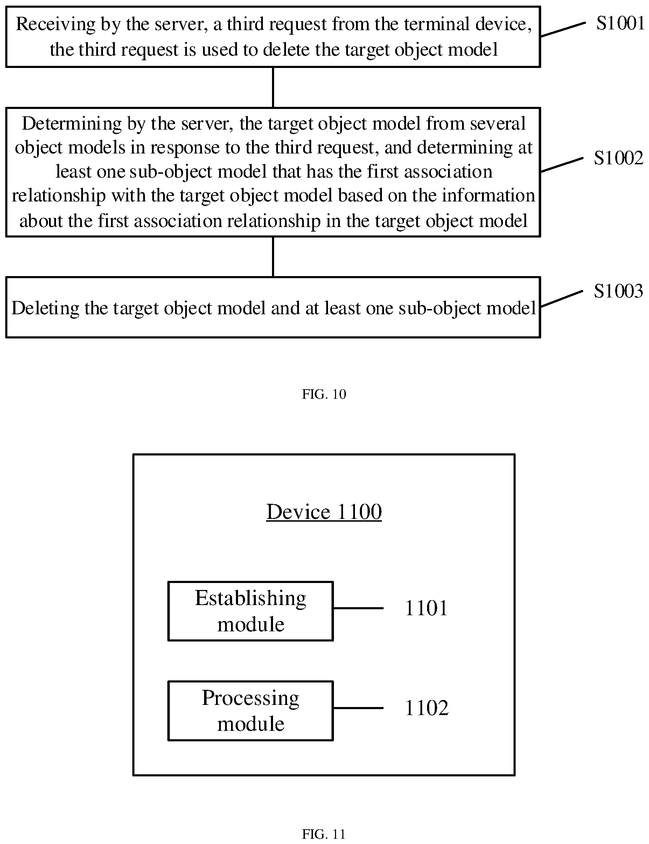

Referring to FIG. 10, which is a flow chart of a method for deleting the historical state of a target object provided by an embodiment of the present disclosure. The specific steps of this method are as follows.

S1001: Receiving by the server, a third request from the terminal device, the third request is used to delete the target object model.

S1002: Determining by the server, the target object model from several object models in response to the third request, and determining at least one sub-object model that has the first association relationship with the target object model based on the information about the first association relationship in the target object model.

S1003: Deleting the target object model and at least one sub-object model.

In this method, through the first association relationship between the target object model and at least one sub-object model, after receiving the instruction to delete the target object model, at least one sub-object model having the first association relationship with the target object model is deleted at the same time, which simplifies user operations and improves user experience.

The above describes the subscription, query, and deletion operations based on the first association relationship between the target object model and at least one sub-object model. However, in actual use, the above operations can not only be performed based on the first association relationship, but also based on the spatial relationship between each object model to perform object model subscription, query, and deletion operations.

Taking space attributes as an example, as shown in FIG. 3, the space range occupied by machines 1, 2, and 3 is included in the space range occupied by workshop A. At this time, the workshop A and the machines 1, 2, and 3 exist to include and be included spatial relationships. In this way, when performing subscription, query, and deletion operations, the server can determine the sub-entity models 1, 2, and 3 corresponding to the machines 1, 2, and 3 based on the spatial relationship of the target entity model corresponding to the workshop A, and perform the corresponding operations.

Based on the same inventive concept, some embodiments of the present disclosure further provide a device for twinning the historical state of an entity.

Referring to FIG. 11, a schematic structural diagram of a device for twining the historical state of a target object is provided for an embodiment of the present disclosure. The device may be the above-mentioned server or a chip or integrated circuit in the device. The device includes a device for executing the above-mentioned modules/units/technical means of the method executed by the server in the method embodiment.

Exemplarily, the device 1100 includes:
an establishing module 1101 configured to establish a target object model and at least one sub-object model respectively for the target object and at least one sub-object attached to the target object; the target object model is used to describe the target object, the at least one sub-object model is used to describe the at least one sub-object, and both the target object model and the at least one sub-object model include time attributes;
a processing module 1102 configured to set the value of the time attribute in the target object model and the at least one sub-object model to a historical time; the historical time is used to indicate the time corresponding to the data in the target object model and at least one sub-object model; and establish a first association relationship between the target object model and the at least one sub-object model, the first association relationship is used to associate the at least one sub-object model to the target object model.

As an embodiment, the device discussed in FIG. 11 can be used to perform the method described in the embodiments shown in FIG. 1. Therefore, for the functions that can be implemented by each functional module of the device, please refer to the description of the embodiments shown in FIG. 1, which will not be repeated here.

Based on the same inventive concept, some embodiments of the present disclosure also provide a device for subscribing to the historical state of a target object.

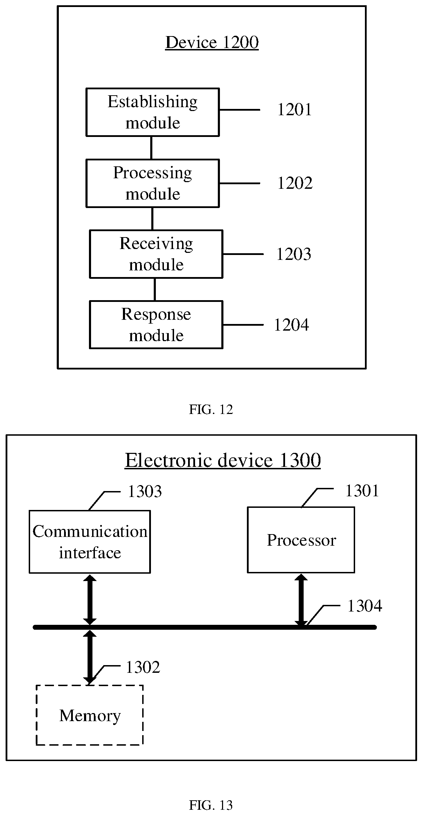

Referring to FIG. 12, an embodiment of the present disclosure provides a schematic structural diagram of a device for subscribing to the historical state of a target object. The device may be the above-mentioned server or a chip or integrated circuit in the device. The device includes modules/units/technical means for implementing the above method executed by the server in the method embodiments.

Exemplarily, the device 1200 includes:
an establishing module 1201 configured to establish a target object model and at least one sub-object model respectively for the target object and at least one sub-object attached to the target object; the target object model is used to describe the target object, the at least one sub-object model is used to describe the at least one sub-object, and both the target object model and the at least one sub-object model include time attributes;
a processing module 1202 configured to set the value of the time attribute in the target object model and the at least one sub-object model to a historical time, the historical time is used to indicate the time corresponding to the data in the target object model and at least one sub-object model; and establish an association between the target object model and the at least one sub-object model, the association being used to associate the at least one sub-object model to the target object model;
a receiving module 1203 configured to receive a first request from a terminal device, the first request is used to request a subscription to the historical state of the target object;
a response module 1204 configured to perform a subscription operation on the target object model in response to the first request and perform a subscription operation on the at least one sub-object model according to the association between the at least one sub-object model and the target object model.

As an embodiment, the device discussed in FIG. 12 can be used to perform the method described in the embodiments shown in FIG. 8. Therefore, for the functions that can be implemented by each functional module of the device, please refer to the description of the embodiments shown in FIG. 8, which will not be repeated here.

As a possible product form of the above device, referring to FIG. 13, an embodiment of the present disclosure also provides an electronic device 1300, including:
at least one processor 1301 and a communication interface 1303 communicatively connected to the at least one processor 1301; the at least one processor 1301 causes the electronic device 1300 to implement the method steps performed by any device in the above method embodiments through the communication interface 1303 by executing instructions stored in a memory 1302.

Obviously, those skilled in the art can make various changes and modifications to the present disclosure without departing from the spirit and scope of the present disclosure. In this way, if these modifications and variations of the present disclosure fall within the scope of the claims of the present disclosure and equivalent technologies, the present disclosure is also intended to include these modifications and variations.

## Claims

1. A method of twinning a historical state of a target object, comprising:
establishing a target object model and at least one sub-object model respectively for a target object and at least one sub-object attached to the target object; wherein the target object model is used for describing the target object, and the at least one sub-object model is used for describing the at least one sub-object, the target object model and the at least one sub-object model both comprise a time attribute;
setting a value of the time attribute in the target object model and the at least one sub-object model to a first historical time, wherein the first historical time is used for indicating a time corresponding to data in the target object model and the at least one sub-object model;
establishing a first association relationship between the target object model and the at least one sub-object model, wherein the first association relationship is used for associating the at least one sub-object model to the target object model.

2. The method of claim 1, wherein the target object comprises a first target entity, and the sub-object comprises a sub-entity; or
the target object comprises a target event, and the sub-object comprises a sub-event.

3. The method of claim 1 or 2, wherein the first historical time is at least one moment before a current moment or at least one duration period before a current moment.

4. The method of claim 3, wherein in a case that the target object comprises a target event, and the sub-object comprises a sub-event, the value of the time attribute in the at least one sub-object model is within a range of the value of the time attribute in the target object model.

5. The method of claim 1 or 2, wherein the first association relationship is used for indicating that the target object model and the at least one sub-object model are in a parent-child relationship.

6. The method of claim 1 or 2, wherein the establishing the first association relationship between the target object model and the at least one sub-object model, comprises:
identifying the target object model as a parent object model, and identifying the at least one sub-object model as a child object model belonging to the parent object model.

7. The method of claim 1 or 2, wherein the target object model and the at least one sub-object model further comprise a model identifier, the model identifier is used for uniquely identifying the target object model and the at least one sub-object model.

8. The method of claim 1 or 2, wherein the target object model and the at least one sub-object model further comprise a member attribute, the member attribute is used for describing user-defined data.

9. The method of claim 1 or 2, wherein the target object comprises a first target entity, the sub-object comprises a sub-entity, and the target object model and the at least one sub-object model further comprises a spatial attribute, the spatial attribute is used for describing one or more of following information of the target object model and the at least one sub-object model:
coordinate system information, geometric shape information, spatial position information, spatial rotation angle information, and spatial range information.

10. The method of claim 9, wherein the spatial attribute comprises the spatial range information, the spatial range information is used for describing a spatial range where the target object model and the at least one sub-object model are located;
wherein a spatial range of the at least one sub-object model does not exceed a spatial range of the target object model.

11. The method of claim 9, further comprising:
establishing a first coordinate system in the target object model, and establishing a second coordinate system in a first sub-object model; wherein the first sub-object model is one of the at least one sub-object model, and an origin of the second coordinate system is determined based on an origin of the first coordinate system;
determining the spatial position information of the target object model and the at least one sub-object model according to the first coordinate system; or determining the spatial position information of the target object model according to the first coordinate system, and determining the spatial position information of the at least one sub-object model according to the second coordinate system;
determining the geometric shape information of the target object model and the at least one sub-object model according to the first coordinate system; or determining the geometric shape information of the target object model according to the first coordinate system, and determining the geometric shape information of the first sub-object model according to the second coordinate system.

12. The method of claim 9, wherein the spatial attribute comprises the spatial position information, the target object model and the at least one sub-object model further comprise a position attribute, and the method further comprises:
in a case that the spatial position information of the target object changes, saving changes in the spatial position information to the position attribute of the target object model;
wherein the position attribute is used for describing a position change of the target object at at least one moment before a current moment, or a position change of the target object within at least one duration period before a current moment.

13. The method of claim 9, further comprising:
in a case that a spatial position of a second sub-object is not within a spatial range of the target object, updating a first association relationship between a second sub-object model corresponding to the second sub-object and the target object model, and updating a spatial attribute and a time attribute of the second sub-object model;
wherein the second sub-object is one of the at least one sub-object.

14. The method of any one of claims 10 to 13, further comprising:
generating a parent object record corresponding to the target object model and at least one child object record corresponding to the at least one sub-object model at at least one moment before a current moment or within at least one duration period before a current moment through the target object model and the at least one sub-object model;
wherein the parent object record is used for describing an attribute state of the target object at at least one moment before the current moment or within at least one duration period before the current moment; the at least one child object record is used for describing an attribute state of the at least one sub-object at at least one moment before the current moment or within at least one duration period before the current moment.

15. The method of claim 14, further comprising:
establishing a second association relationship between the parent object record and the at least one child object record, the second association relationship being used for associating the at least one child object record with the parent object record;
wherein each child object record corresponds to a unique parent object record, the parent object record and the at least one child object record both comprise a time range, and a time range of the child object record is within a time range of the parent object record.

16. The method of claim 14, wherein in a case that the spatial attribute comprises the spatial range information, the parent object record and the child object record are used for describing a change information of spatial range of the target object and the at least one sub-object at at least one moment before a current moment or within at least one duration period before a current moment;
at at least one moment before the current moment or within at least one duration period before the current moment, a spatial range of the child object record corresponding to the at least one sub-object is in a spatial range of the parent object record.

17. The method of claim 14, wherein in a case that the spatial attribute comprises the spatial position information, the parent object record and the child object record are used for describing a change information of spatial position movement at at least one moment before a current moment or within at least one duration period before a current moment;
wherein a spatial position of the at least one sub-object is in a spatial range of the parent object record at at least one moment before the current moment or within at least one duration period before the current moment.

18. The method of claim 14, wherein in a case that the spatial attribute comprises the geometric shape information, the parent object record and the child object record are used for describing a change information of geometric shape of the target object and the at least one sub-object at at least one moment before a current moment or within at least one duration period before a current moment;
wherein a geometric shape of the at least one child object is in a geometric shape of the parent object record at at least one moment before the current moment or within at least one duration before the current moment.

19. The method of claim 1 or 2, wherein the target object comprises a target event and the sub-object comprises a sub-event, the method further comprises:
establishing a second target entity model for a second target entity, wherein the second target entity model is used for describing a historical state of the second target entity, and the second target entity model comprises a time attribute;
determining a value of the time attribute of the target entity model as a second historical time, wherein the second historical time is used for indicating a time corresponding to data in the second target entity model;
establishing a third association relationship between the second target entity model and the target object model, wherein the third association relationship is used for associating the second target entity model with the target object model.

20. The method of claim 19, wherein the third association relationship is used for indicating that the second target entity model and the target object model have a spatial relationship, and the spatial relationship is used for indicating that the target object corresponding to the target object model occurs within a spatial range of the second target entity corresponding to the second target entity model.

21. The method of claim 1 or 2, wherein the target object comprises a target event, and the sub-object comprises a sub-event;
the target object model and the at least one sub-object model further comprise a spatial attribute, and the spatial attribute is used for describing a position information of the target object and the at least one sub-object in a case that the target object and the at least one sub-object occur.

22. The method of claim 21, wherein the spatial attribute comprises a spatial range and/or a spatial position, wherein a spatial range of the at least one sub-object model is in a spatial range of the target object model, or a spatial position of the at least one sub-object model is in a range of a spatial position of the target object model.

23. The method of claim 1 or 2, wherein the target object comprises a target event, the sub-object comprises a sub-event, and the method further comprises:
generating a corresponding target event object record based on attribute parameters of the target object at different history times, and the target object model corresponding to the history times;
generating a corresponding sub-event object record based on attribute parameters of the at least one sub-object at different history times, and the at least one sub-object model corresponding to the history times;
wherein the attribute parameters comprise at least one of attribute name, data type, or attribute value.

24. The method of claim 23, further comprising:
establishing a fourth association relationship between the target event object record and the at least one sub-event object record, the fourth association relationship being used for associating the at least one sub-event object record with the target event object record;
wherein each sub-event object record in the at least one sub-event object record corresponds to a unique target event object record, both the target event object record and the at least one sub-event object record comprise a time range, and a time range of the sub-event object record is within a time range of the target event object.

25. A method for subscribing to a historical state of a target object, comprising:
establishing a target object model and at least one sub-object model respectively for a target object and at least one sub-object attached to the target object; wherein the target object model is used for describing the target object, and the at least one sub-object model is used for describing the at least one sub-object, the target object model and the at least one sub-object model both comprise a time attribute;
setting a value of the time attribute in the target object model and the at least one sub-object model to a first historical time, wherein the first historical time is used for indicating a time corresponding to data in the target object model and the at least one sub-object model;
establishing a first association relationship between the target object model and the at least one sub-object model, the first association relationship being used for associating the at least one sub-object model to the target object model;
receiving a first request from a terminal device, wherein the first request is used for requesting a subscription to the historical state of the target object;
performing a subscription operation on the target object model in response to the first request, performing a subscription operation on the at least one sub-object model according to the first association relationship between the at least one sub-object model and the target object model.

26. The method of claim 25, wherein the target object comprises a target entity, and the sub-object comprises a sub-entity; or,
the target object comprises a target event, and the sub-object comprises a sub-event.

27. The method of claim 25 or 26, wherein the first request carries a subscription item, and the method further comprises:
generating subscription information matching the subscription item in a case that a change in the target object model and/or the at least one sub-object model occurs;
send the subscription information to the terminal device.

28. The method of claim 27, wherein the subscription item comprises one or more of following: a spatial attribute, a position attribute, and a member attribute.

29. The method of claim 27, wherein the sub-object comprises a sub-entity, and the change comprises: a sub-object model change, and the sub-object model change is used for representing a change of quantity of the at least one sub-object model corresponding to the target object model.

30. A device for twinning a historical state of a target object, comprising:
an establishing module configured to establish a target object model and at least one sub-object model respectively for a target object and at least one sub-object attached to the target object; wherein the target object model is used for describing the target object, and the at least one sub-object model is used for describing the at least one sub-object, and both the target object model and the at least one sub-object model comprises a time attribute;
a processing module configured to set a value of the time attribute of the target object model and the at least one sub-object model to a first historical time, and establish a first association relationship between the target object model and the at least one sub-object model, wherein the first historical time is used for indicating a time corresponding to data of the target object model and the at least one sub-object model, and the first association relationship is used for associating the at least one sub-object model with the target object model.

31. A device for subscribing to a historical state of a target object, comprising:
an establishing module configured to establish a target object model and at least one sub-object model respectively for a target object and at least one sub-object attached to the target object; wherein the target object model is used for describing the target object, and the at least one sub-object model is used for describing the at least one sub-object, and both the target object model and the at least one sub-object model comprise a time attribute;
a processing module configured to set a value of the time attribute of the target object model and the at least one sub-object model to a first historical time, and establish a first association relationship between the target object model and the at least one sub-object model, wherein the first historical time is used for indicating a time corresponding to data of the target object model and the at least one sub-object model, and the first association relationship is used for associating the at least one sub-object model to the target object model;
a receiving module configured to receive a first request from a terminal device, wherein the first request is used for requesting a subscription to the historical state of the target object;
a response module configured to perform a subscription operation on the target object model in response to the first request and perform a subscription operation on the at least one sub-object model according to the first association relationship between the at least one sub-object model and the target object model.

32. An electronic device, comprising:
at least one processor, and a memory communicatively connected to the at least one processor;
wherein the memory stores instructions that are executed by the at least one processor, and the at least one processor executes the instructions stored in the memory to implements the method of any one of claims 1 to 24 and 25 to 29.

33. A computer-readable storage medium, configured to store instructions, wherein in a case that the instructions are executed, the method of any one of claims 1 to 24 and 25 to 29 is implemented.
